# EUROPÄISCHE PATENTANMELDUNG

(11) **EP 4 450 720 A1**
(43) Veröffentlichungstag der Anmeldung: **23.10.2024**
(21) Anmeldenummer: 24170776.9
(22) Anmeldetag: 17.04.2024
(51) Int. Cl.: E03B 9/02, F16L 5/10

(54) **FROSTSICHERE AUSLAUFARMATUR UND AUSLAUFGEHÄUSE EINER ARMATUR**

(30) Priorität: 21.04.2023 DE 202023102110 U
(71) Anmelder: Gebr. Kemper GmbH + Co. KG, 57462 Olpe (DE)
(72) Erfinder: Weber, Fabian, 57462 Olpe (DE)
(74) Vertreter: Grünecker Patent- und Rechtsanwälte PartG mbB

(57) **Zusammenfassung**

Um eine frostsichere Auslauflaufarmatur bereitzustellen, bei welcher eine von einem Zwischenrohr (80) bzw. Auslaufgehäuse (30) durchsetzten Rosette (44) bündig an einer Außenwandung (152) eines Gebäudes (150) anliegt, zeichnet sich eine erfindungsgemäße Frostsichere Auslaufarmatur mit einem Ventilgehäuse (10), welches einen Ventilsitz (26) ausbildet, einem Auslaufgehäuse (30) und einer Zwischenspindel (50), die in einem in einer Rohrdurchführung (154) eines Gebäudes (150) verlegten Zwischenrohr (80) aufgenommen ist, welches das Auslaufgehäuse (30) mit dem Ventilgehäuse (10) verbindet, und mit einer von dem Auslaufgehäuse (30) und/oder dem Zwischenrohr (80) durchsetzten Rosette (44), dadurch aus, dass die Rosette (44) ein erstes Rosettenteil (130) zur Abdeckung der Rohrdurchführung (154) und ein zweites Rosettenteil (140) zur Befestigung mit dem Auslaufgehäuse (30) und/oder dem Zwischenrohr (80) aufweist, wobei das erste Rosettenteil (130) durch das zweite Rosettenteil (140) gehalten ist.

## Beschreibung

Die vorliegende Erfindung betrifft eine frostsichere Auslaufarmatur sowie ein Auslaufgehäuse einer Armatur.

Frostsichere Auslaufarmaturen sind beispielsweise aus der EP 3 139 074 A1 bekannt. Diese hat ein Ventilgehäuse, welches einen Ventilsitz ausbildet und üblicherweise von einem Befestigungskranz zur verdrehfesten Montage des Ventilgehäuses umgeben ist. Dieses Ventilgehäuse befindet sich üblicherweise im Gebäudeinneren, jedenfalls mit erheblichem Abstand zu der Gebäudeaußenwand, mit dem Ziel, dass die Temperatur im Bereich des Ventilsitzes zu keiner Zeit den Gefrierpunkt des Wassers erreicht. Die frostsichere Auslaufarmatur hat des Weiteren ein Auslaufgehäuse, welches in der Regel mit einer Auslauftülle und einem Belüfter versehen ist und in dem in der Regel ein Ventiloberteil mit einer Handhabe und einer axial beweglichen Stellspindel montiert ist. Dieses Auslaufgehäuse wird bei der frostsicheren Auslaufarmatur an der Gebäudeaußenwand montiert. Zur Überbrückung des Abstandes zwischen dem Auslaufgehäuse und dem Ventilgehäuse ist ein Zwischenrohr vorgesehen, welches im Stand der Technik als Schutzrohr, in das eine Zwischenspindel aufgenommen ist, ausgeformt ist. Des Weiteren ist die Zwischenspindel im Stand der Technik als Hohlspindel ausgebildet und formt einen Strömungsweg für das Fluid von dem Ventilgehäuse zu dem Auslaufgehäuse aus. Die Zwischenspindel dient im Stand der Technik als Stellspindel, welche axial verschieblich relativ zu dem Ventilgehäuse gehalten ist und mit dem Ventilsitz zusammenwirkt, um die Auslaufarmatur abzusperren.

Die Auslaufarmatur ist üblicherweise so ausgebildet, dass beim Absperren der Auslaufarmatur durch Anlage des Ventilkörpers gegen den Ventilsitz der Belüfter zwangsgeführt, oder aufgrund einer Druckdifferenz aktiviert wird, so dass ein Ringraum zwischen der Zwischenspindel und dem Zwischenrohr entleert wird. Mit anderen Worten wird der gesamte Bereich zwischen dem Ventilsitz und einer Auslauftülle der Auslaufarmatur entleert.

Damit die Auslaufarmatur leerlaufen kann, wobei in der Auslaufarmatur vorhandenes Wasser außerhalb eines Gebäudes aus dem Auslaufgehäuse hinausfließt, ist es notwendig, dass das Zwischenrohr von innerhalb des Gebäudes nach außerhalb des Gebäudes durch eine Gebäudewand hindurch mit einem Gefälle verbaut ist. Dieses Gefälle beträgt üblicherweise maximal 2%, kann aber auch bis zu 6% betragen. Von außen an der Gebäudewandung wird eine Rosette vor dem Auslaufgehäuse an das Zwischenrohr über ein Gewinde geschraubt. Aufgrund des Gefälles ragt das Zwischenrohr gerade nicht senkrecht zur äußeren Gebäudewandung aus diesem hinaus. Wird über ein Gewinde an diesem Rohr dann eine aus dem Stand der Technik bekannte Rosette aufgeschraubt, liegt die Rosette naturgemäß nicht bündig an der Außenwand des Gebäudes an.

Es ist Aufgabe vorliegender Erfindung eine frostsichere Auslauflaufarmatur bereitzustellen, bei welcher eine von einem Zwischenrohr bzw. Auslaufgehäuse durchsetzten Rosette bündig an einer Außenwandung eines Gebäudes anliegt.

Die Aufgabe der Erfindung wird durch eine frostsichere Auslaufarmatur mit den Merkmalen des unabhängigen Anspruchs 1 gelöst. Weitere vorteilhafte Ausgestaltungen sind in den Unteransprüchen sowie der nachfolgenden Beschreibung angegeben.

Unter der von einem Zwischenrohr bzw. Auslaufgehäuse "durchsetzten" Rosetten, kann im vorliegenden Zusammenhang vorzugsweise verstanden werden, dass die Rosette zumindest teilweise das Zwischenrohr bzw. das Auslaufgehäuse umgibt. Dabei durchragt vorzugsweise das Zwischenrohr bzw. das Auslaufgehäuse zumindest teilweise die Rosette.

Die Zwischenspindel ist üblicherweise mit radialen Abstand zu den umgebenden Gehäuseteilen, d.h. dem Zwischenrohr und den Gehäusewänden des Auslaufgehäuses vorgesehen. Dabei ist üblicherweise ein zusammenhängender Ringraum vorgesehen, der sich üblicherweise im Wesentlichen über die gesamte Länge der Zwischenspindel ergibt. Lediglich die freien und an die übrigen Teile der Auslaufarmatur angeschlossenen Enden der Zwischenspindel sind üblicherweise radial gefasst, um mit der Spindel des Ventiloberteils auf Seiten des Auslaufgehäuses bzw. dem Ventilkörper im Bereich des Ventilgehäuses verbunden zu werden.

Dieser Ringraum dient der thermischen Isolation gegenüber dem wasserführenden inneren Bereich. Denn das Zwischenrohr ragt üblicherweise über eine Gebäudeaußenwand hinaus und ist dort mit dem Auslaufgehäuse unmittelbar verbunden. So wird zumindest der gebäudewandaußenseitige Bereich des Zwischenrohres mit der dort wirkenden Temperatur beaufschlagt. Im Winter kann diese Temperatur deutlich unter 0 °C liegen.

Mit Blick auf die notwendige Festigkeit kann das Zwischenrohr aus Kunststoff oder mit Metall ausgebildet sein. Das Zwischenrohr ist unmittelbar mit dem Auslaufgehäuse verschraubt. Auch trägt das Zwischenrohr der vorliegenden Erfindung eine Rosette, die die Bohrung der Gebäudewand gebäudeaußenseitig überragt und damit abdeckt.

Die Rosette der vorliegenden Erfindung umfasst zumindest ein erstes Rosettenteil und ein zweites Rosettenteil. Das erste Rosettenteil dient vorrangig der Abdeckung der Rohrdurchführung, während das zweite Rosettenteil für die Befestigung mit dem Auslaufgehäuse bzw. dem Zwischenrohr ausgebildet ist.

Das zweite Rosettenteil hat einen festen Halt bzw. ist fest positioniert, da dieses mit dem Auslaufgehäuse bzw. dem Zwischenrohr befestigt ist. Diese Befestigung kann vorzugsweise eine aufgeschraubte Verbindung über ein Gewinde sein.

Das erste Rosettenteil ist hingegen in dieser Art nicht an dem Auslaufgehäuse bzw. dem Zwischenrohr befestigt. Dieses wird lediglich durch das zweite Rosettenteil gehalten, wobei dieses Halten durch das zweite Rosettenteil auf unterschiedliche Art und Weise erfolgen kann. Somit liegt das erste Rosettenteil zur Abdeckung der Rohrdurchführung an einer Gebäudewand gebäudeaußenseitig an und wird in dieser Position von dem zweiten Rosettenteil gehalten.

Vorzugsweise weist das erste Rosettenteil einen ersten Kontaktbereich und das zweite Rosettenteil einen zweiten Kontaktbereich auf, wobei das erste Rosettenteil durch einen Kontakt mit dem zweiten Rosettenteil gehalten ist. Vorteilhafterweise ist das erste Rosettenteil durch einen gemeinsamen Kontaktbereich der beiden Kontaktbereiche gehalten. Hierbei ist das zweite Rosettenteil derart auf das erste Rosettenteil beaufschlagt, dass das erste Rosettenteil in Position gehalten wird. So kann das erste Rosettenteil über die Kontaktbereiche vorzugsweise kraftschlüssig durch das zweite Rosettenteil gehalten sein. Dabei kann das zweite Rosettenteil in unterschiedlichen Winkeln zu dem ersten Rosettenteil angestellt werden, wobei auch in unterschiedlichen Anstellwinkeln ein ausreichender Kontakt zwischen den beiden Rosettenteilen besteht, durch welchen das ersten Rosettenteil durch das zweite Rosettenteil gehalten werden kann. Auf diese Weise ist ein Winkelausgleich zwischen dem ersten Rosettenteil und dem zweiten Rosettenteil möglich.

Das zweite Rosettenteil ist an dem Auslaufgehäuse bzw. dem Zwischenrohr befestigt, vorzugsweise aufgeschraubt. Dadurch ist der Winkel zwischen dem zweiten Rosettenteil und der Gebäudeaußenwand abhängig von dem Gefälle des Zwischenrohres bzw. von dem Winkel zwischen Zwischenrohr und Gebäudeaußenwand. Das erste Rosettenteil soll zur vollständigen Abdeckung der Rohrdurchführung jedoch bündig an der Gebäudeaußenwand anliegen. Durch den vorstehend erläuterten Winkelausgleich zwischen dem ersten Rosettenteil und dem zweiten Rosettenteil kann das zweite Rosettenteil an dem Auslaufgehäuse bzw. dem Zwischenrohr befestigt sein und das erste Rosettenteil bündig an der Gebäudeaußenwand anliegen, auch wenn das Zwischenrohr nicht senkrecht zu der Gebäudeaußenwand aus dieser herausragt, beispielsweise wenn dieses mit einem Gefälle verbaut ist. Die Kontaktbereiche der Rosettenteile sowie der gemeinsame Kontaktbereich können auf unterschiedliche Weise ausgebildet sein, um einen Winkelausgleich zwischen den beiden Rosettenteilen zu ermöglichen.

Es ist von Vorteil, wenn der erste Kontaktbereich zumindest teilweise konkav ausgebildet ist. Es ist besonders vorteilhaft, wenn dieser über seinen gesamten Bereich konkav ausgebildet ist. Kumulativ oder alternativ kann der zweite Kontaktbereich zumindest teilweise konvex ausgebildet sein. Vorteilhafterweise ist der zweite Kontaktbereich über seinen gesamten Bereich konvex ausgebildet. Durch die konvexe bzw. konkave Ausbildung der Kontaktbereiche können sich das erste und das zweite Rosettenteil betriebssicher zueinander bewegen und somit einen Winkelausgleich zwischen diesen beiden Teilen ermöglichen. Insbesondere könnten die Flächen der Kontaktbereiche bei einer konvexen bzw. konkaven Ausbildung besser übereinander gleiten.

In einer besonders bevorzugten Ausführungsform ist der erste Kontaktbereich konkav und der zweite Kontaktbereich konvex ausgebildet, sodass die beiden Kontaktbereiche zueinander passende Gegenstücke darstellen, wodurch die Flächen der beiden Kontaktbereiche betriebssicher übereinander gleiten können und somit betriebssicher ein Winkelausgleich zwischen den beiden Rosettenteilen erfolgen kann. Die beiden Kontaktbereiche können somit komplementär zueinander ausgebildet sein.

Es ist vorteilhaft, wenn der erste Kontaktbereich sphärisch mit einem Radius ausgebildet ist. Kumulativ oder alternativ kann der zweite Kontaktbereich sphärisch mit einem Radius ausgebildet sein. Hierdurch kann ein kugelflächiger Kontaktbereich zwischen dem ersten und dem zweiten Rosettenteil erzeugt werden, um die beiden Rosettenteile betriebssicher gegeneinander unter Reibwirkung bis zu einem bestimmten Winkel frei anstellen zu können. Der Winkelausgleich zwischen den beiden Rosettenteilen ist somit um in allen Richtungen möglich. Auf diese Weise können bestimmte Abweichungen des 90°-Winkels zwischen dem Zwischenrohr und der Außenwandung ausgeglichen werden.

Vorzugsweise sind die beiden Radien der beiden Kontaktbereiche gleich. Vorteilhafterweise sind die Radien gleich einem Radius des gemeinsamen Kotaktbereiches. Dies ermöglicht eine betriebssichere Bewegung von dem ersten und dem zweiten Rosettenteil zueinander. Zudem kann so eine gleichmäßig starke Reibung bei der Bewegung und somit beim Winkelausgleich entlang der Kontaktbereiche bzw. entlang des gemeinsamen Kontaktbereiches vorliegen. Es ist denkbar, dass der Radius des zweiten Kontaktbereiches kleiner als der Radius des ersten Kontaktbereiches ist, wenn Toleranzen berücksichtigt werden sollen. Besonders vorteilhaft ist jedoch, wenn diese beiden Radien gleich sind.

Unter dem "gemeinsamen Kontaktbereich" kann im vorliegenden Zusammenhang vorzugsweise der Bereich verstanden werden, in welchem der erste Kontaktbereich und der zweite Kontaktbereich in Kontakt miteinander stehen.

In einer bevorzugten Ausführungsform ist der gemeinsame Kontaktbereich in Abhängigkeit von der Anordnung des Rosettenteils und des zweiten Rosettenteils zueinander variabel. Mit unterschiedlicher Anstellung der beiden Teile zueinander kann sich die Größe des gemeinsamen Kontaktbereiches ändern, wobei beispielsweise der gemeinsame Kontaktbereich umso größer ist, je kleiner der Winkelausgleich zwischen den beiden Rosettenteilen ist. Auch ein kleinerer Kontaktbereich ist ausreichend, damit das erste Rosettenteil von dem zweiten Rosettenteil gehalten werden kann.

Vorteilhafterweise weist das erste Rosettenteil einen Innendurchmesser und das zweite Rosettenteil einen Innendurchmesser auf, wobei der Innendurchmesser des zweiten Rosettenteils kleiner ist als der Innendurchmesser des ersten Rosettenteils. Das zweite Rosettenteil hat auf diese Weise einen möglichst kleinen Innendurchmesser, da dieses vorzugsweise über eine Schraubverbindung mittels Gewinde an dem Auslaufgehäuse bzw. an dem Zwischenrohr befestigt ist. Der Innendurchmesser des zweiten Rosettenteils ist demnach so klein, dass dieses entsprechend beispielsweise mit dem Zwischenrohr in Kontakt steht und auf dieses geschraubt werden kann. Hingegen ist der Innendurchmesser des ersten Rosettenteils größer als der Innendurchmesser des zweiten Rosettenteils, damit physikalisch ein Winkelausgleich zwischen den beiden Rosettenteilen möglich ist. Andernfalls könnte ein kleinerer Innendurchmesser des ersten Rosettenteils den Winkelausgleich zwischen den beiden Teilen blockieren.

Es ist von Vorteil, wenn das erste Rosettenteil als eine Wandscheibe und das zweite Rosettenteil als eine Mutter ausgebildet ist. Die Wandscheibe ist vorteilhaft, um die Rohrdurchführung auf möglichst einfache Weise abzudecken. Eine Mutter lässt sich auf besonders einfache Weise über ein Gewinde auf das Zwischenrohr aufschreiben und somit an diesem befestigen.

Kumulativ oder alternativ wird die Aufgabe der Erfindung durch ein Auslaufgehäuse mit den Merkmalen des unabhängigen Anspruchs 9 gelöst.

Das Auslaufgehäuse einer Armatur ist mit einem in einer Rohrdurchführung eines Gebäudes verlegten Zwischenrohres verbindbar. Das Auslaufgehäuse ist zusammen mit einer Rosette angeordnet, die zur Abdeckung der Rohrdurchführung mit dem Zwischenrohr bzw. dem Auslaufgehäuse verbindbar ist. Diese Anordnung von dem Auslaufgehäuse und der Rosette zeichnet sich dadurch aus, dass die Rosette bündig an einer Außenwandung des Gebäudes anliegend mit dem von einem senkrechten Winkel zu der Außenwandung abweichend ausgerichteten Zwischenrohr bzw. Auslaufgehäuse verbunden ist. Die Abweichung des Winkels, die auf diese Weise ausgeglichen wird, beträgt vorzugsweise bis zu 6°.

Vorzugsweise umfasst die Rosette ein erstes Rosettenteil und ein zweites Rosettenteil, wobei das erste Rosettenteil bündig an der Außenwandung anliegt und das zweite Rosettenteil mit dem Zwischenrohr bzw. dem Auslaufgehäuse verbunden ist. Auf diese Weise kann Rosette an dem Zwischenrohr bzw. dem Auslaufgehäuse befestigt sein und bündig an der Außenwandung anliegen. Zwischen den beiden Rosettenteilen erfolgt ein Winkelausgleich, da das Zwischenrohr bzw. das Auslaufgehäuse von einem senkrechten Winkel zu der Außenwandung abweichend ausgerichtet ist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine Längsschnittansicht eines ersten Ausführungsbeispiels einer frostsicheren Auslaufarmatur;

- Figur 2: eine schematische Darstellung einer nicht an der Außenwandung anliegenden Rosette nach dem Stand der Technik;
- Figur 3: eine perspektivische Darstellung eines zweiten Ausführungsbeispiels einer frostsicheren Auslaufarmatur;
- Figur 4: eine schematische Darstellung eines dritten Ausführungsbeispiels einer frostsicheren Auslaufarmatur;
- Figur 5: eine perspektivische Darstellung einer Rosette nach Figuren 1, 3 und 4;
- Figur 6: eine perspektivische Darstellung eines ersten Rosettenteils nach Figur 5; und
- Figur 7: eine perspektivische Darstellung eines zweiten Rosettenteils nach Figur 5.

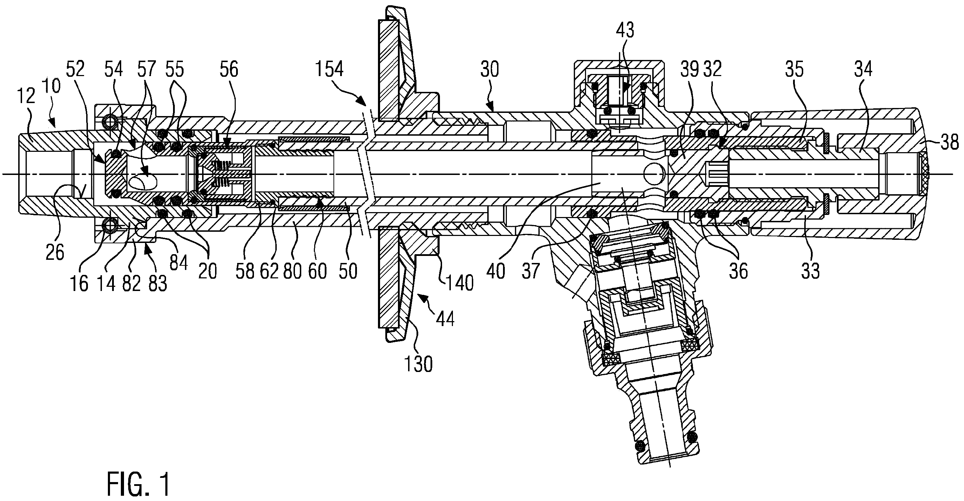

In einem ersten Ausführungsbeispiel nach Figur 1 umfasst eine frostsichere Auslaufarmatur ein Ventilgehäuse 10, ein Auslaufgehäuse 30 und eine zwischen beiden Gehäusen 10, 30 angeordnete Zwischenspindel 50, wie sie aus der EP 3 139 074 A1 bekannt ist. Das Ventilgehäuse 10 umfasst ein metallisches Ventilsitzgehäuse 12, welches im Wesentlichen zylindrisch ausgeformt ist und an seinem Außenumfang durch einen Kragen 14 mit polygonaler Querschnittsform überragt ist. Das Ventilsitzgehäuse 12 ist in dem Einlaufende eines Zwischenrohres 80 axial fixiert.

Hierzu formt das Zwischenrohr 80, welches die Zwischenspindel 50 umgibt, einteilig eine Verbreiterung 82 mit polygonaler Querschnittsform entsprechend der Querschnittsform des Kragens 14 aus. Die Verbreiterung 82 bildet an ihrem inneren Ende eine Axialschulter 84 aus, gegen welche der Kragen 14 anliegt. Auf seiner vorderen Stirnseite ist der Kragen 14 durch Sicherungsmittel in Form von zwei Stiften 16 in axialer Richtung fixiert, die in sich quer zur Längsachse des Zwischenrohres 80 erstreckenden Querbohrung 18 aufgenommen sind. Das in dieser Weise axial fixierte Ventilsitzgehäuse 12 ist über zwei O-Ringe 20, die in am inneren Ende an dem Außenumfang des Ventilsitzgehäuses 12 ausgesparten Nuten eingesetzt sind, gegenüber dem Zwischenrohr 80 abgedichtet.

Die polygonale Außenumfangsfläche der Verbreiterung 82 bildet einen Sitz 83, auf den ein nicht gezeigter Befestigungskranz mit polygonaler Bohrung aufgeschoben werden kann. Der Befestigungskranz, das Zwischenrohr 80 sowie das Ventilsitzgehäuse 12 sind dementsprechend verdrehfest miteinander fixiert und an eine Gebäudewand fixierbar. Der Befestigungskranz hat zur Montage an der Gebäudewand mehrere auf dem Umfang verteilt vorgesehene Befestigungsbohrungen.

Das Ventilsitzgehäuse 12 bildet mit einer Innenumfangsfläche einen Ventilsitz 26 für die Anlage eines Ventilkörpers 52 aus. Der Ventilkörper 52 trägt an seinem einlaufseitigen Ende eine Dichtung 54 und ist an seinem gegenüberliegenden Ende als dünnwandiger Zylinder ausgeformt, der eine zylindrische Aufnahme für eine Rohrbelüfter-Patrone 56 und ein Innengewinde 58 ausformt, welches mit einer Verbindungshülse 60 im Gewindeeingriff ist, die endseitig in die Zwischenspindel 50 bis zu einem Kragen 62 der Verbindungshülse 60 eingeschoben und verdrehfest und axial festgelegt mit der Zwischenspindel 50 verbunden ist, insbesondere darin verpresst ist. Das Ventilsitzgehäuse 12 ist gegenüber dem Ventilkörper 52 über zwei Dichtringe 55 abgedichtet, die in an den Ventilkörper 52 ausgesparten Nuten gehalten sind. Zwischen diesen Dichtringen 55 und der Dichtung 54 sind an dem Ventilkörper 52 mehrere sich radial öffnende Bohrungen vorgesehen, die Einlässe 57 ausbilden, die zu der hohlen Zwischenspindel 50 führen.

Das Auslaufgehäuse 30 weist ein Ventiloberteil 32 mit einer Führungshülse 33 auf, an welcher eine Stellspindel 34 drehbar, jedoch axial festgelegt gehalten ist. Diese Stellspindel 34 ist im Gewindeeingriff mit einer hohlen Spindel 35, welche einseitig von der Stellspindel 34 durchsetzt und auf der gegenüberliegenden Seite die Zwischenspindel 50 endseitig aufnimmt. Über zwei O-Ringe 36 ist die Spindel 35 auf Seiten eines verdrehfest mit der Stellspindel 34 verbundenen Drehgriffs 38 gegenüber der Führungshülse 33 abgedichtet, indes axial verschieblich vorgesehen. Auf der gegenüberliegenden Seite befindet sich ein weiterer O-Ring 37, über welchen die Spindel 35 gegenüber einer Innenumfangsbohrung des Auslaufgehäuses 30 abgedichtet ist. In der Spindel 35 ist als Endstopfen eine ein Zentrierelement ausbildende Spannhülse 39 vorgesehen, welche in der Spindel 35 im Gewindeeingriff und damit axial verschieblich gehalten ist und welche den Durchgang durch die Spindel 35 in Richtung auf den Drehgriff 38 verlegt. Die Spannhülse 39 weist ein Zylindersegment 40 auf, das einteilig an der Spannhülse 39 angeordnet und mit mehreren Radialbohrungen 41 versehen ist, die mit mehreren, an der Spindel 35 ausgesparten radialen Bohrungen, die Auslässe 42 bilden, fluchten. Zwischen den Bohrungen 41, 42 ist ein Hohlraum für den Durchtritt des Mediums vorgesehen, so dass das Medium radial durch die Bohrungen 41, 42 auch dann fließen kann, wenn diese nicht fluchten. In etwa in axialer Höhe dieser Bohrungen 41, 42 befindet sich ein Belüfter 43, der abhängig von dem Innendruck Luft durch die Bohrungen 41, 42 in die Zwischenspindel 50 einleitet oder aber bei einem in dem Auslaufgehäuse 30 wirkenden Überdruck des Fluides verschlossen ist, sodass das Fluid nicht durch den Belüfter 43 austreten kann.

Das Auslaufgehäuse 30 ist mit dem auslaufgehäuseseitigen Ende des Zwischenrohres 80 verschraubt. Die Verschraubung erfolgt ohne Dichtmittel. In etwa auf Höhe dieser Verbindungsstelle ist eine mit dem Zwischenrohr 80 verschraubte Rosette 44 angeordnet.

Mit dieser Ausgestaltung ergibt sich, dass das Fluid durch die Auslaufarmatur unter Umgehung des Ringraumes hindurch geleitet wird, der zwischen der Zwischenspindel 50 und dem Zwischenrohr 80 ausgespart ist. Vielmehr strömt das Fluid in Längsrichtung der Armatur allein durch den hohlen Innenraum der Zwischenspindel 50. Das Fluid tritt an der Einlassseite durch die Einlässe 57 des Ventilkörpers 52 ein, passiert die Rückflussverhinderer-Patrone 56 und die Verbindungshülse 60, durchläuft die hohle Zwischenspindel 50 und tritt radial durch die Radialbohrungen 41 und die Auslässe 42 aus.

Auf dieser Höhe ist das Auslaufgehäuse 30 von einer Schlauchverschraubung 45 zum Anschluss eines Wasserschlauches überragt, welcher unter Zwischenlage eines Rohrbelüfters 46 in das metallische Auslaufgehäuse 30 eingeschraubt ist, welches zwischen der Schlauchverschraubung 45 und dem Rohrbelüfter 46 mit einer Belüftungsbohrung 47 versehen ist. Im Falle eines Rückflusses entgegen der eigentlichen Strömungsrichtung von einem Schlauch in die Schlauchverschraubung 45 versperrt der Rohrbelüfter 46 den Durchgang zu der Spindel 35, sodass das Fluid nicht in die Zwischenspindel 50 gelangen kann, sondern durch die Belüftungsbohrung 47 abgeführt wird.

Im vorliegenden Ausführungsbeispiel ist weist die Rosette 44 ein erstes Rosettenteil 130 zur Abdeckung einer Rohrdurchführung 154 und ein zweites Rosettenteil 140 auf. Das zweite Rosettenteil 140 ist an dem Zwischenrohr 80 befestigt, indem diese über ein Gewinde miteinander verschraubt sind. Das erste Rosettenteil 130 wird durch das zweite Rosettenteil 140 gehalten.

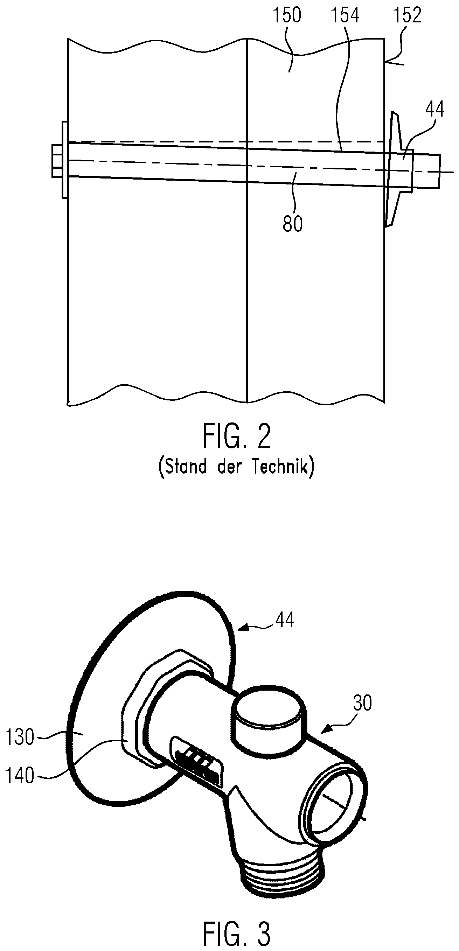

Eine frostsichere Auslaufarmatur wird üblicherweise in einem Gebäude 150 verbaut, wie es in Figur 2 dargestellt ist. Dabei ist ein in einer Rohrdurchführung 154 eines Gebäudes 150 verlegtes Zwischenrohr 80 mit einem Gefälle angeordnet, sodass das Wasser außerhalb des Gebäudes ablaufen kann. Somit ist das Zwischenrohr 80 mit von einem senkrechten Winkel zu einer Außenwandung 152 abweichend ausgerichtet. Eine Rosette 44, wie sie aus dem Stand der Technik bekannt ist und in der Figur 2 dargestellt ist, ist derart an dem Zwischenrohr 80 befestigt, dass die Rosette 44 aufgrund des Gefälles des Zwischenrohres 80 nicht bündig an der Außenwandung 152 anliegt. Ein Winkelausgleich ist mit der aus dem Stand der Technik bekannten Rosette nicht möglich.

In einem zweiten Ausführungsbeispiel nach Figur 3 umfasst eine Rosette 44, die an einem Auslaufgehäuse 30 befestigt ist, ein erstes Rosettenteil 130 zur Abdeckung einer Rohrdurchführung 154 und ein zweites Rosettenteil 140 zur Befestigung mit dem Auslaufgehäuse 30. Das zweite Rosettenteil 140 der Rosette 44 kann nicht nur an dem Zwischenrohr 80 befestigt werden, sondern auch an dem Auslaufgehäuse 30, wie das vorliegende Ausführungsbeispiel zeigt. Dabei ist das zweite Rosettenteil 140 über ein Gewinde mit dem Auslaufgehäuse 30 verschraubt. Das erste Rosettenteil 130 wird durch das zweite Rosettenteil 140 gehalten.

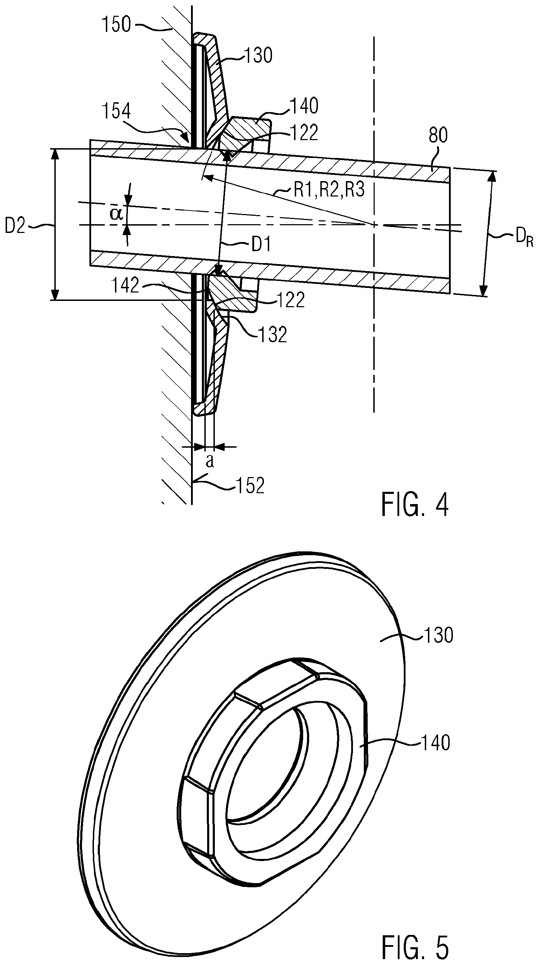

In einem dritten Ausführungsbeispiel einer frostsicheren Auslaufarmatur nach Figur 4 ist ein Zwischenrohr 80 in einer Rohrdurchführung 154 eines Gebäudes 150 verlegt. Eine Rosette 44 ist von dem Zwischenrohr 80 durchsetzt. Die Rosette 44 weist ein erstes Rosettenteil 130 zur Abdeckung der Rohrdurchführung 154 und ein zweites Rosettenteil 140 auf. Im vorliegenden Ausführungsbeispiel ist das zweite Rosettenteil 140 an dem Zwischenrohr 80 befestigt. Das erste Rosettenteil 130 ist durch das zweite Rosettenteil 140 gehalten. Die Rosette 44 liegt bündig an einer Außenwandung 152 des Gebäudes 150 an und ist mit dem von einem senkrechten Winkel zu der Außenwandung 152 abweichend ausgerichteten Zwischenrohr 80 verbunden.

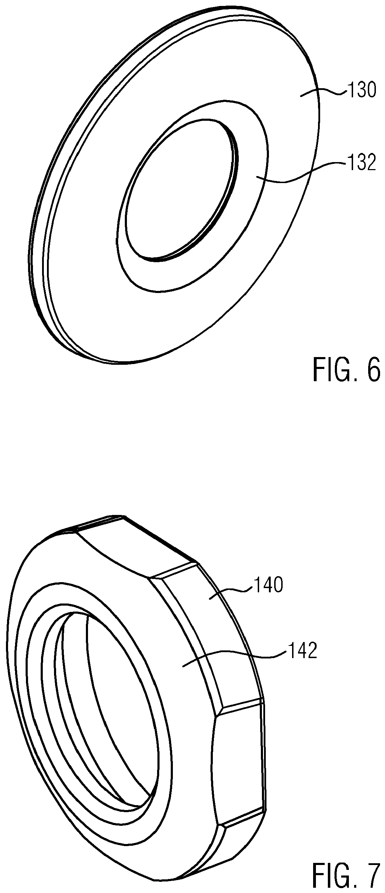

In den Ausführungsbeispielen nach Figuren 1, 3 und 4 ist das erste Rosettenteil 130 als eine Wandscheibe und das zweite Rosettenteil 140 als eine Mutter ausgebildet. Das erste Rosettenteil 130 weist einen ersten Kontaktbereich 132 auf und das zweite Rosettenteil 140 einen zweiten Kontaktbereich 142, wie beispielsweise aus den Figuren 5 bis 7 ersichtlich ist.

Die beiden Kontaktbereiche 132, 142 sind jeweils sphärisch mit einem Radius R2, R3 ausgebildet, wobei der erste Kontaktbereich 132 konkav und der zweite Kontaktbereich 142 konvex ausgebildet ist.

In dem Ausführungsbeispiel nach Figur 4 sind die Radien R2, R3 der beiden Kotaktbereiche 132, 142 gleich einem Radius R1 des gemeinsamen Kontaktbereiches 122. Auf diese Weise kann ein betriebssicherer Winkelausgleich zwischen den beiden Rosettenteilen 130, 140 und eine gleichmäßige Reibung bei der Bewegung entlang des gemeinsamen Kotaktbereiches 122 erfolgen.

Zudem weisen das erste Rosettenteil 130 einen Innendurchmesser D2 und das zweite Rosettenteil 140 einen Innendurchmesser D1 auf. Der Innendurchmesser D1 des zweiten Rosettenteils 140 ist kleiner als der Innendurchmesser D2 des ersten Rosettenteils. Auf diese Weise ist ein Winkelausgleich zwischen den beiden Rosettenteilen 130, 140 bzw. zwischen dem Zwischenrohr 80 und der Außenwandung 152 möglich.

Im vorliegenden Ausführungsbeispiel ist das Zwischenrohr 80 mit einem Winkel von α abweichend von 90° zwischen Zwischenrohr 80 und Außenwandung 152 ausgerichtet. Aufgrund des kleineren Durchmessers D2 des zweiten Rosettenteils 140 gegenüber dem Durchmesser D1 des ersten Rosettenteils 130 können sich die Rosettenteile 130, 140 derart zueinander bewegen, dass ein Winkelausgleich möglich ist, sodass das erste Rosettenteils 130 bündig an der Außenwandung 152 anliegt. Dabei gleiten die sphärischen Kontaktbereiche 132, 142 übereinander. Der Winkelausgleich wird unter anderem durch die Dimensionierung der beiden Rosettenteile begrenzt. Die Rosettenteile 130, 140 sind derart dimensioniert, dass Winkelausgleiche von bis zu 6° möglich sind. Auch die Innendurchmesser der Kontaktbereiche 132, 142 der beiden Rosettenteile 130, 140 der Ausführungsbeispiele nach Figuren 1 und 3 sind derart dimensioniert.

### Bezugszeichenliste

- 10: Ventilgehäuse
- 12: Ventilsitzgehäuse
- 14: Kragen
- 16: Stift
- 18: Querbohrung
- 20: O-Ring
- 26: Ventilsitz
- 30: Auslaufgehäuse
- 32: Ventiloberteil
- 33: Führungshülse
- 34: Stellspindel
- 35: Spindel
- 36: O-Ring
- 37: O-Ring
- 38: Drehgriff
- 39: Spannhülse
- 40: Zylindersegment
- 41: Radialbohrung
- 42: Auslass
- 43: Belüfter
- 44: Rosette
- 45: Schlauchverschraubung
- 46: Rohrbelüfter
- 47: Belüftungsbohrung
- 50: Zwischenspindel
- 52: Ventilkörper
- 54: Dichtung
- 55: Dichtring
- 56: Rückflussverhinderer-Patrone
- 57: Einlass
- 58: Innengewinde
- 60: Verbindungshülse
- 62: Kragen
- 80: Zwischenrohr
- 82: Verbreiterung
- 83: Sitz
- 84: Axialschulter
- 90: Ventilführungshülse
- 92: Ringschulter
- 94: Schraubenfeder
- 96: Ventilkegelkörper
- 98: Flachdichtung
- 100: Führungselement
- 102: Ringspalt
- 110: Aufnahmeabschnitt
- 112: Vorsprung
- 114: Werkzeugaufnahme
- 116: Bohrung
- 118: Gewindeeingriff
- 122: Kontaktbereich
- R1: Radius des Kontaktbereichs 122
- 130: erster Rosettenteil
- D1: Innendurchmesser des ersten Rosettenteils 130
- 132: Kontaktbereich
- R2: Radius des Kontaktbereichs 132
- a: Stegbreite des Rosettenteils 130
- 140: zweites Rosettenteil
- D2: Innendurchmesser des zweiten Rosettenteils 140
- 142: Kontaktbereich
- R3: Radius des Kontaktbereichs 142
- 150: Gebäude
- 152: Außenwandung des Gebäudes 150
- 154: Rohrdurchführung
- D_{R}: Außendurchmesser des Zwischenrohres 80
- α: Winkelabweichung von 90° zwischen Zwischenrohr 80 und Außenwandung 152

## Patentansprüche

1. Frostsichere Auslaufarmatur mit einem Ventilgehäuse (10), welches einen Ventilsitz (26) ausbildet, einem Auslaufgehäuse (30) und einer Zwischenspindel (50), die in einem in einer Rohrdurchführung (154) eines Gebäudes (150) verlegten Zwischenrohr (80) aufgenommen ist, welches das Auslaufgehäuse (30) mit dem Ventilgehäuse (10) verbindet, und mit einer von dem Auslaufgehäuse (30) und/oder dem Zwischenrohr (80) durchsetzten Rosette (44), **dadurch gekennzeichnet, dass** die Rosette (44) ein erstes Rosettenteil (130) zur Abdeckung der Rohrdurchführung (154) und ein zweites Rosettenteil (140) zur Befestigung mit dem Auslaufgehäuse (30) und/oder dem Zwischenrohr (80) aufweist, wobei das erste Rosettenteil (130) durch das zweite Rosettenteil (140) gehalten ist.

2. Frostsichere Auslaufarmatur nach Anspruch 1, **dadurch gekennzeichnet, dass** das erste Rosettenteil (130) einen ersten Kontaktbereich (132) und das zweite Rosettenteil (140) einen zweiten Kontaktbereich (142) aufweist, wobei das erste Rosettenteil (130) durch einen Kontakt mit dem zweiten Rosettenteil (140), insbesondere durch einen gemeinsamen Kontaktbereich (122) der beiden Kontaktbereiche (130, 140), gehalten ist.

3. Frostsichere Auslaufarmatur nach Anspruch 2, **dadurch gekennzeichnet, dass** der erste Kontaktbereich (132) zumindest teilweise, vorzugsweise über seinen gesamten Bereich, konkav und/oder der zweite Kontaktbereich (142) zumindest teilweise, vorzugsweise über seinen gesamten Bereich, konvex ausgebildet ist.

4. Frostsichere Auslaufarmatur nach Anspruch 3, **dadurch gekennzeichnet, dass** der erste Kontaktbereich (132) sphärisch mit einem Radius (R2) und/oder der zweite Kontaktbereich (142) sphärisch mit einem Radius (R3) ausgebildet sind.

5. Frostsichere Auslaufarmatur nach Anspruch 4, **dadurch gekennzeichnet, dass** die Radien (R2, R3) der beiden Bereiche (132, 142) gleich, insbesondere gleich einem Radius (R1) des gemeinsamen Kontaktbereiches (122) sind.

6. Frostsichere Auslaufarmatur nach einem der Ansprüche 2 bis 5, **dadurch gekennzeichnet, dass** der gemeinsame Kontaktbereich (122) in Abhängigkeit von der Anordnung des ersten Rosettenteils (130) und des zweiten Rosettenteils (140) zueinander variabel ist.

7. Frostsichere Auslaufarmatur nach einem der vorstehenden Ansprüche, **dadurch gekennzeichnet, dass** das erste Rosettenteil (130) einen Innendurchmesser (D2) und das zweite Rosettenteil (140) einen Innendurchmesser (D1) aufweisen, wobei der Innendurchmesser (D1) des zweiten Rosettenteils (140) kleiner ist als der Innendurchmesser (D2) des ersten Rosettenteils (130).

8. Frostsichere Auslaufarmatur nach einem der vorstehenden Ansprüche, **dadurch gekennzeichnet, dass** das zweite Rosettenteil (140) ein Innengewinde umfasst und das Auslaufgehäuse (30) und/oder das Zwischenrohr (80) ein Außengewinde umfasst, wobei das zweite Rosettenteil (140) mit dem Auslaufgehäuse (30) und/oder dem Zwischenrohr (80) über das Innengewinde und das Außengewinde in einem Gewindeeingriff steht.

9. Frostsichere Auslaufarmatur nach einem der vorstehenden Ansprüche, **dadurch gekennzeichnet, dass** das erste Rosettenteil (130) als eine Wandscheibe und das zweite Rosettenteil (140) als eine Mutter ausgebildet ist.

10. Auslaufgehäuse (30) einer Armatur, das mit einem in einer Rohrdurchführung (154) eines Gebäudes (150) verlegten Zwischenrohr (80) verbindbar ist, und eine Rosette (44), die zur Abdeckung der Rohrdurchführung (154) mit dem Zwischenrohr (80) und/oder dem Auslaufgehäuse (30) verbindbar ist, **dadurch gekennzeichnet, dass** die Rosette (44) bündig an einer Außenwandung (152) des Gebäudes (150) anliegend mit dem von einem senkrechten Winkel zu der Außenwandung (152) abweichend ausgerichteten Zwischenrohr (80) und/oder Auslaufgehäuse (30) verbunden ist.

11. Auslaufgehäuse (30) nach Anspruch 10, **dadurch gekennzeichnet, dass** die Rosette (44) ein erstes Rosettenteil (130) und ein zweites Rosettenteil (140) umfasst, wobei das erste Rosettenteil (130) bündig an der Außenwandung (152) anliegt und das zweite Rosettenteil (140) mit dem Zwischenrohr (80) und/oder dem Auslaufgehäuse verbunden ist.
